# EUROPEAN PATENT APPLICATION

(11) **EP 2 582 167 A1**
(43) Date of publication of application: **17.04.2013**
(21) Application number: 11791903.5
(22) Date of filing: 31.05.2011
(51) Int. Cl.: H04W 12/06

(54) **SIPTO DECISION METHOD AND DEVICE FOR H(E)NB SYSTEM**

(30) Priority: 12.06.2010 CN 201010206676
(71) Applicant: ZTE Corporation, Shenzhen, Guangdong 518057 (CN)
(72) Inventor: ZHU, Li, Shenzhen Guangdong 518057 (CN)
(74) Representative: Ilgart, Jean-Christophe
(86) International application number: PCT/CN2011/074995
(87) International publication number: WO 2011/153912

(57) **Abstract**

The disclosure claims a Selected Internet Protocol Traffic Offload (SIPTO) decision method and device for a Home (evolved) Node-B (H(e)NB) system, both the method and device can judge whether a H(e)NB has the SIPTO authority, and can allow the H(e)NB to implement the SIPTO if the H(e)NB has the SIPTO authority. The method and device of the disclosure can support the SIPTO of the H(e)NB.

## Description

### TECHNICAL FIELD

The disclosure relates to the communication field, and in particular to a Selected Internet Protocol Traffic Offload (SIPTO) decision method and device of a Home (evolved) Node-B (H(e)NB) system which includes a Home Node-B (HNB) and a Home evolved Node-B (HeNB).

### BACKGROUND

The HNB is configured to provide wireless coverage of The 3rd Generation Telecommunication (3G) for 3G mobile phones in homes. The HNB generally includes the access functions of a standard 3G macro wireless access network, such as a Node B and the like, and the wireless resource management functions such as a standard Radio Network Controller (RNC) and the like.

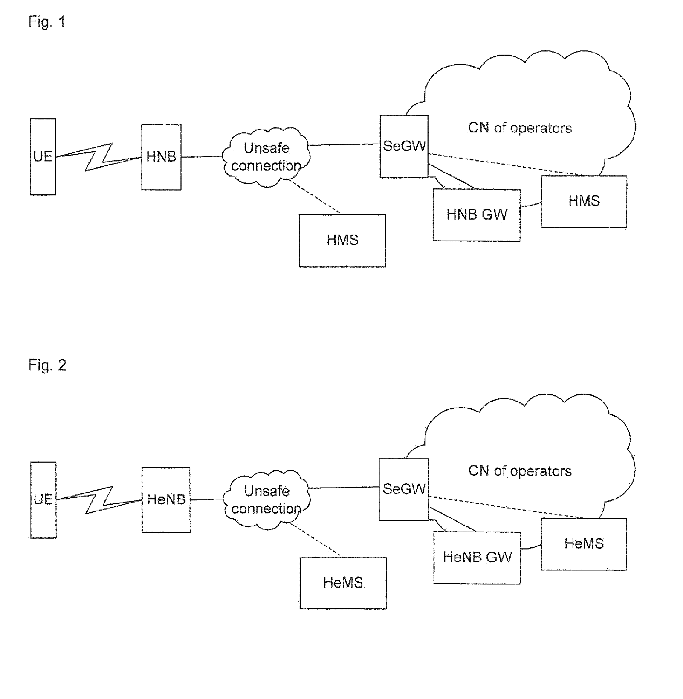

Fig. 1 is a system structure diagram of the HNB; as shown in Fig. 1, the HNB is accessed to a Core Network (CN) of an operator via a Security Gateway (SeGW). The SeGW represents the CN of the operator and implements mutual authentication with the HNB. A HNB Gateway (HNB GW) and the SeGW are entities logically separated in the CN of the operator, and are used for the access control of the User Equipment (UE) of a non-Closed Subscriber Group (CSG).

Fig. 2 is a system structure diagram of the HeNB; as shown in Fig. 2, the difference between the HeNB and the HNB is that: the HeNB is an air interface for connecting The 3rd-Generation Partnership Project (3GPP) UE and an Evolved Universal Terrestrial Radio Access Network (EUTRAN). The H(e)NB includes the HNB and the HeNB, namely, is the joint name of the HNB and the HeNB.

As the existing wireless access technology makes the data transmission achieve higher rate, the operators have great requirement on reducing the network load and saving transmission cost by offloading the network traffic, but local IP accessing makes the UE with an IP address can directly access, via the H(e)NB, to the devices with IP addresses in other IP networks of the local residents or companies; thereby, reducing the network load and saving the transmission cost by offloading the selected traffic of a H(e)NB subsystem and a macro network (such as the internet traffic of the H(e)NB subsystem, the internet traffic, the company traffic of the macro network and the like) is increasingly concerned by the operators.

However, the current technical specifications have no description for the decision mechanism of the SIPTO of the H(e)NB, and have no corresponding protection measures for the transmission paths and transmission contents of the SIPTO of the H(e)NB either.

### SUMMARY

In view of the above, the main purpose of the disclosure is to provide a SIPTO decision method and device of a H(e)NB system, so as to support the SIPTO of the H(e)NB.

In order to achieve the above purpose, the technical solutions of the disclosure are realized as follows:
a SIPTO decision method of a H(e)NB system, includes:
   judges whether the H(e)NB has a SIPTO authority, and allows the H(e)NB to implement the SIPTO if the H(e)NB has the SIPTO authority.

The process of judges whether the H(e)NB has the SIPTO authority may include:
searching a H(e)NB identity stored in a decision point for judging whether the H(e)NB has the SIPTO authority, and confirming that the H(e)NB has the SIPTO authority if the H(e)NB identity is found, or the identity of the H(e)NB which is added with a SIPTO mark is found.

The method may further include:
the H(e)NB implements the SIPTO;
or, the H(e)NB implements the SIPTO, and establishes a connection with the CN.

The method may further include:
judges whether a UE can implement the SIPTO, and implements the SIPTO aiming at the data of the UE when the UE can implement the SIPTO.

The process of judges whether the UE can implement the SIPTO may include:
searches a UE identity which is stored in a related network element for authenticating the UE, and determines that the UE can implement the SIPTO if the UE identity is found, or the identity of the UE which is added with a SIPTO mark is found.

The method may further include:
implements network security protection including the IP Security (IPsec) and/or Transport Layer Security (TLS) for the transmission data of the H(e)NB and/or the UE.

A SIPTO decision method of a H(e)NB system, includes: judges whether the UE can implement the SIPTO, and implementing the SIPTO aiming at the transmission data of the UE when the UE can implement the SIPTO.

The process of judges whether the UE can implement the SIPTO may include:
searching a UE identity which is stored in the related network element for authenticating the UE, and determining that the UE can implement the SIPTO if the UE identity is found, or the identity of the UE which is added with a SIPTO mark is found.

The method may further include:
the UE selects to implement the SIPTO, aiming at the transmission data of the UE, the H(e)NB accessed by the UE implements the SIPTO with the internet, and/or implements the SIPTO with the local network of residents/companies.

The SIPTO implemented by the H(e)NB may be implemented in the case that the local network of the residents/companies allows the SIPTO; or,
the SIPTO implemented by the H(e)NB may be directly implemented without allowing the SIPTO by the local network of the residents/companies.

The method may further include: not protecting the transmission data of the UE, or implements the network security protection including the IPsec and/or TLS.

A SIPTO decision device of a H(e)NB system, includes a SIPTO capacity decision unit and a SIPTO execution unit, wherein,
the SIPTO capacity decision unit is configured to judge whether the H(e)NB and/or the UE have/has the SIPTO authority, and to notify a judgment result to the SIPTO execution unit;
the SIPTO execution unit is configured to determine whether implementing corresponding SIPTO communication according to the received judgment result.

The SIPTO execution unit may be further configured to implement corresponding SIPTO and/or CN communication according to the judgment result.

The device may further include a SIPTO capacity authorization unit, which is configured to authorize the SIPTO capacity of the H(e)NB and/or the UE, in order to make the authorization information referred by the authorization support the SIPTO capacity decision unit to implement the judgment.

The device may further include a security protection unit, which is configured to acquire current communication condition from the SIPTO execution unit, so as to determine whether implementing security protection for the current communication and executing the security protection.

It can be seen that the method and device of the disclosure can support the SIPTO of the H(e)NB.

### BRIEF DESCRIPTION OF THE DRAWINGS

- Fig. 1: is a HNB system structure diagram of the prior art;
- Fig. 2: is a HeNB system structure diagram of the prior art;
- Fig. 3: is a SIPTO decision flow sketch of the disclosure;
- Fig. 4: is a SIPTO decision flowchart of embodiment one of the disclosure;
- Fig. 5: is a SIPTO decision flowchart of embodiment two of the disclosure;
- Fig. 6: is a SIPTO decision flowchart of embodiment three of the disclosure;
- Fig. 7: is a SIPTO decision flowchart of embodiment four of the disclosure;
- Fig. 8: is a SIPTO decision flowchart of embodiment five of the disclosure;
- Fig. 9: is a SIPTO decision flowchart of embodiment six of the disclosure;
- Fig. 10: is a SIPTO decision device diagram of an embodiment of the disclosure.

### DETAILED DESCRIPTION

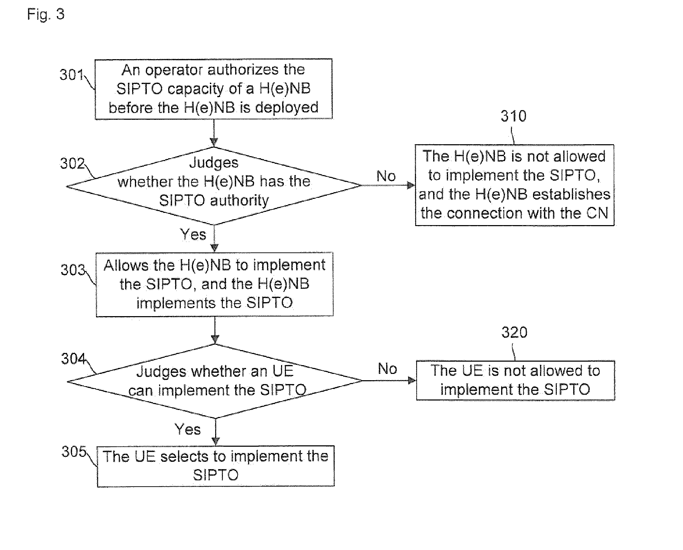

See Fig. 3, Fig. 3 is a SIPTO decision flow sketch of the disclosure, wherein the flow includes the steps as follows:
Step 301: an operator may authorize the SIPTO capacity of a H(e)NB before the H(e)NB is deployed.

For example, the operator can store the identity of the H(e)NB in the decision point which is used for judging whether the H(e)NB has the SIPTO authority, and add a SIPTO mark which is corresponding to the identity. The decision point which can be used for judging whether the H(e)NB has the SIPTO authority includes the SeGW, or a Service Gateway (SGW), or a Packet Data Gateway (PGW), or a Mobility Management Entity (MME), or a Mobile Switching Center (MSC), or a Serving General Packet Radio Service (GPRS) Support Node (SGSN), or a H(e)NB Gateway, or a Traffic Offload Function (TOF) entity, and the like.

Step 302: when the H(e)NB starts, the operator network implements successful mutual authentication with the H(e)NB, and judges whether the H(e)NB has the SIPTO authority; if yes, proceeds to Step 303; otherwise, proceeds to Step 310.

Specifically, when judging whether the H(e)NB has the SIPTO authority, the H(e)NB identity stored in the decision point which is used for judging whether the H(e)NB has the SIPTO authority can be searched; determines that the H(e)NB has the SIPTO authority if the found identity is added with the SIPTO mark; otherwise, determines that the H(e)NB has no SIPTO authority.

Step 303: the H(e)NB has the SIPTO authority, and the H(e)NB is allowed to implement the SIPTO, the H(e)NB implements the H(e)NB. Meanwhile, the H(e)NB can further establish a connection with the CN.

Step 304: judges whether the UE accessed to the H(e)NB can implement the SIPTO; if yes, proceeds to Step 305; otherwise, proceeds to Step 320.

Specifically, the H(e)NB firstly implements an UE registration, and notifies the UE that the H(e)NB has the SIPTO capacity, and can further authorize the SIPTO capacity of the UE; for example: stores the UE identity in a related network element for authenticating the UE, and adds the SIPTO mark which is corresponding to the identity. The UE identity stored in the related network element which is used for authenticating the UE can be searched when judging whether the UE can implement the SIPTO; determines that the UE can implement the SIPTO if the found identity is added with the SIPTO mark; otherwise, determines that the UE cannot implement the SIPTO.

Step 305: the UE implements the SIPTO or the UE can select whether implementing the SIPTO if the UE can implement the SIPTO. The UE does not implement the SIPTO if the UE selects not to implement the SIPTO. The UE can judge whether implementing the SIPTO according to the Quality of Service (QoS) and/or mobility requirements of the transmission data and the like.

When the UE selects to use the SIPTO, aiming at the data of the UE, the H(e)NB can implement a traffic transmission with the internet without passing through the CN, and/or directly implements the traffic transmission with the local network of the residents/companies without passing through the CN in the case that the local network of the residents/companies allows the SIPTO. The H(e)NB can judge whether implementing the SIPTO according to the QoS and/or mobility requirements of the transmission data and the like. And this flow ends.

Specifically, the traffic transmission without passing through the CN that implemented between the H(e)NB and internet and/or the local network of the residents/companies can be implemented via a local gateway; the local gateway can be combined with or separated from the H(e)NB. Additionally, the traffic among the H(e)NB, the internet and/or the local network of the residents/companies which is transmitted via the local gateway can be unprotected, or can be protected by adopting the network security protection modes such as IPsec and/or TLS and the like. Whether adopting the network security protection modes such as IPsec and/or TLS and the like is determined according to the operator requirements, or requirements such as the QoS and mobility requirements of the transmission data and the like.

Step 310: the H(e)NB is not allowed to implement the SIPTO, the H(e)NB establishes a connection with the CN. And this flow ends.

Step 320: the UE is not allowed to implement the SIPTO.

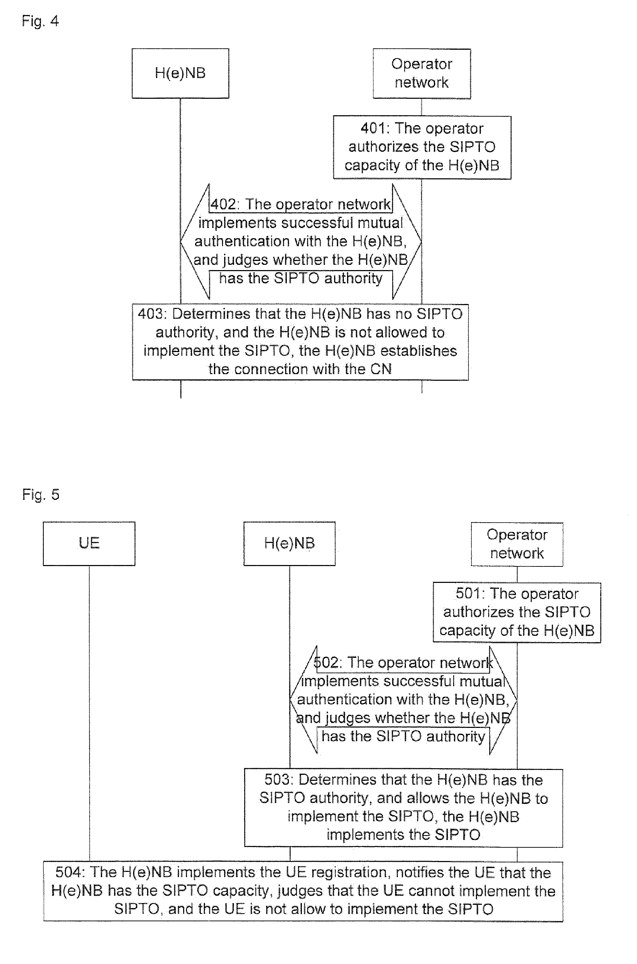

The above operation flow may perform different flows as shown in Fig. 4 to Fig. 9 under different application scenes.

See Fig. 4, Fig. 4 is a SIPTO decision flowchart of embodiment one of the disclosure; the flow includes the steps as follows:
Step 401: the operator authorizes the SIPTO capacity of the H(e)NB.
Step 402: the operator network implements successful mutual authentication with the H(e)NB, and judges whether the H(e)NB has the SIPTO authority.
Step 403: determines that the H(e)NB has no SIPTO authority, and the H(e)NB is not allowed to implement the SIPTO, the H(e)NB establishes a connection with the CN.

See Fig. 5, Fig. 5 is a SIPTO decision flowchart of embodiment two of the disclosure; the flow includes the steps as follows:
Step 501: the operator authorizes the SIPTO capacity of the H(e)NB.
Step 502: the operator network implements successful mutual authentication with the H(e)NB, and judges whether the H(e)NB has the SIPTO authority.
Step 503: determines that the H(e)NB has the SIPTO authority, and the H(e)NB is allowed to implement the SIPTO, the H(e)NB implements the SIPTO. Meanwhile, the H(e)NB can further establish a connection with the CN.
Step 504: the H(e)NB implements the UE registration, notifies the UE that the H(e)NB has the SIPTO capacity, judges that the UE cannot implement the SIPTO, and does not allow the UE to implement the SIPTO.

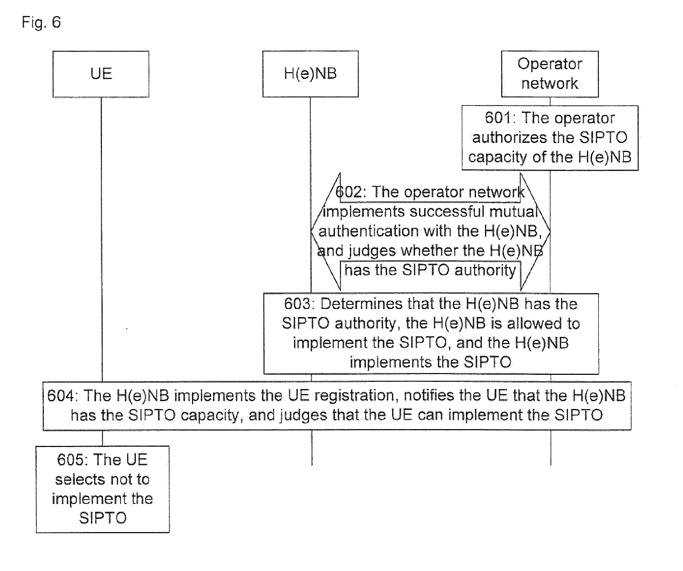

See Fig. 6, Fig. 6 is a SIPTO decision flowchart of embodiment three of the disclosure; the flow includes the steps as follows:
Step 601: the operator authorizes the SIPTO capacity of the H(e)NB.
Step 602: the operator network implements successful mutual authentication with the H(e)NB, and judges whether the H(e)NB has the SIPTO authority.
Step 603: determines that the H(e)NB has the SIPTO authority, and the H(e)NB is allowed to implement the SIPTO, the H(e)NB implements the SIPTO. Meanwhile, the H(e)NB can further establish a connection with the CN.
Step 604: the H(e)NB implements the UE registration, notifies the UE that the H(e)NB has the SIPTO capacity, and judges that the UE can implement the SIPTO.
Step 605: the UE selects not to implement the SIPTO.

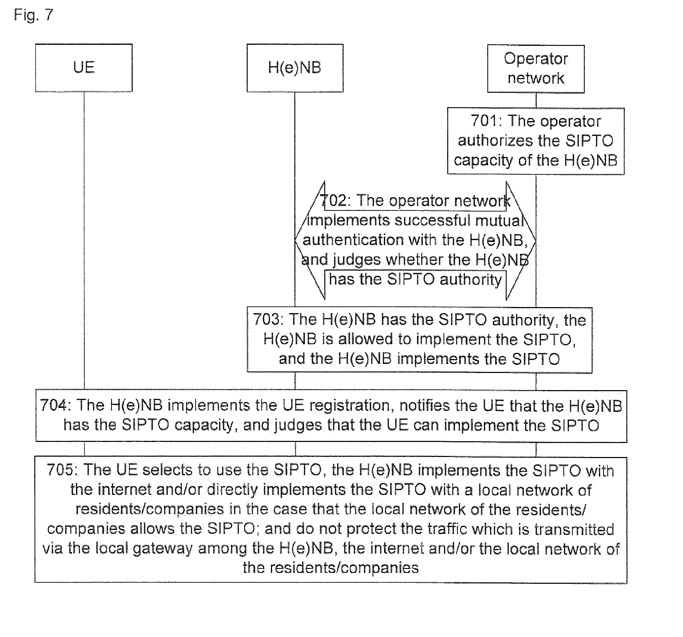

See Fig. 7, Fig. 7 is a SIPTO decision flowchart of embodiment four of the disclosure; the flow includes the steps as follows:
Step 701: the operator authorizes the SIPTO capacity of the H(e)NB.
Step 702: the operator network implements successful mutual authentication with the H(e)NB, and judges whether the H(e)NB has the SIPTO authority.
Step 703: the H(e)NB has the SIPTO authority, and the H(e)NB is allowed to implement the SIPTO, the H(e)NB implements the SIPTO. Meanwhile, the H(e)NB can further establish a connection with the CN.
Step 704: the H(e)NB implements the UE registration, notifies the UE that the H(e)NB has the SIPTO capacity, and judges that the UE can implement the SIPTO.
Step 705: the UE selects to use the SIPTO, aiming at the data of the UE, the H(e)NB implements the SIPTO with the internet and/or directly implements the SIPTO with the local network of the residents/companies in the case that the local network of the residents/companies allows the SIPTO; and the traffic among the H(e)NB, the internet and/or the local network of the residents/companies which is transmitted via the local gateway is unprotected.

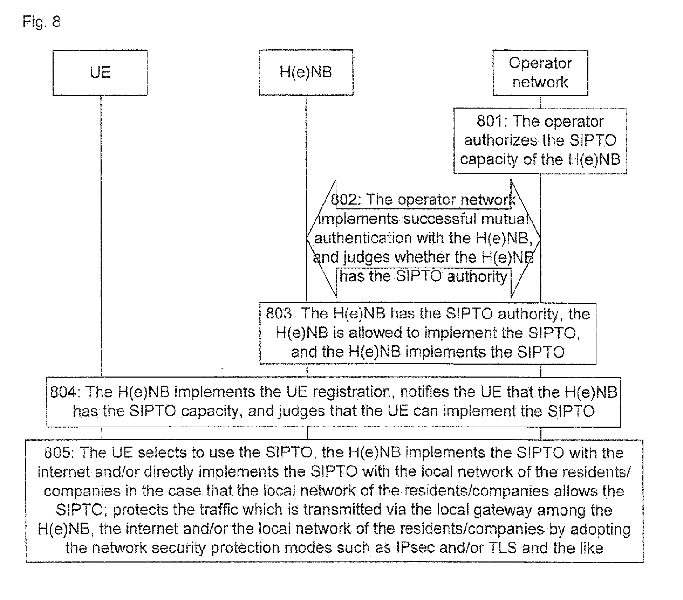

See Fig. 8, Fig. 8 is a SIPTO decision flowchart of embodiment five of the disclosure; the flow includes the steps as follows:
Step 801: the operator authorizes the SIPTO capacity of the H(e)NB.
Step 802: the operator network implements successful mutual authentication with the H(e)NB, and judges whether the H(e)NB has the SIPTO authority.
Step 803: the H(e)NB has the SIPTO authority, the H(e)NB is allowed to implement the SIPTO, the H(e)NB implements the SIPTO. Meanwhile, the H(e)NB can further establish a connection with the CN.
Step 804: the H(e)NB implements the UE registration, notifies the UE that the H(e)NB has the SIPTO capacity, and judges that the UE can implement the SIPTO.
Step 805: the UE selects to use the SIPTO, aiming at the data of the UE, the H(e)NB implements the SIPTO with the internet and/or directly implements the SIPTO with the local network of the residents/companies in the case that the local network of the residents/companies allows the SIPTO; and the traffic among the H(e)NB, the internet and/or the local network of the residents/companies which is transmitted via the local gateway is protected by adopting the network security protection modes such as IPsec and/or TLS and the like.

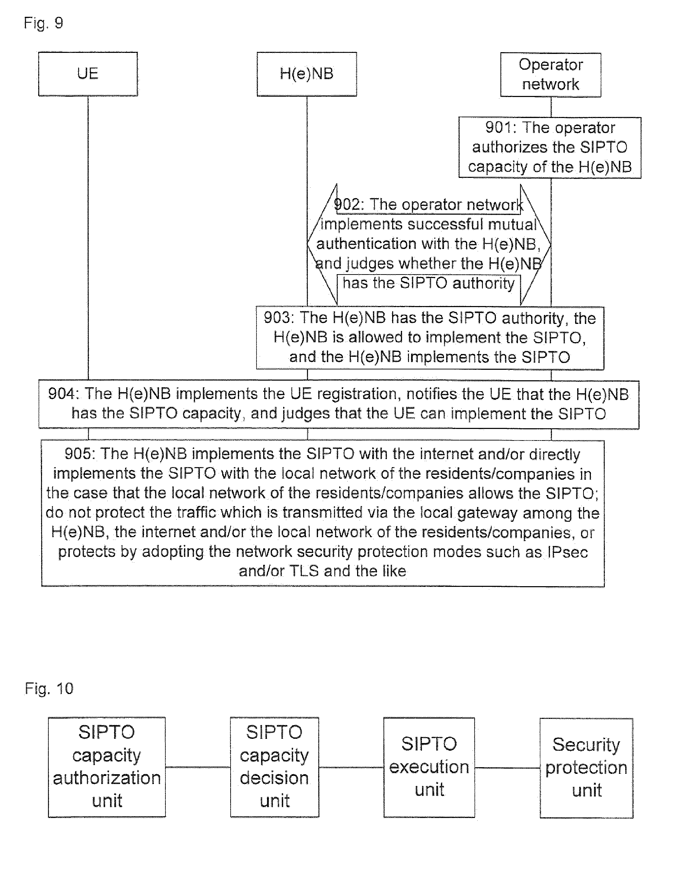

See Fig. 9, Fig. 9 is a SIPTO decision flowchart of embodiment six of the disclosure; the flow includes the steps as follows:
Step 901: the operator authorizes the SIPTO capacity of the H(e)NB.
Step 902: the operator network implements successful mutual authentication with the H(e)NB, and judges whether the H(e)NB has the SIPTO authority.
Step 903: the H(e)NB has the SIPTO authority, the H(e)NB is allowed to implement the SIPTO, the H(e)NB implements the SIPTO. Meanwhile, the H(e)NB can further establish a connection with the CN.
Step 904: the H(e)NB implements the UE registration, notifies the UE that the H(e)NB has the SIPTO capacity, and judges that the UE can implement the SIPTO.
Step 905: aiming at the data of the UE, the H(e)NB implements the SIPTO with the internet and/or directly implements the SIPTO with the local network of the residents/companies in the case that the local network of the residents/companies allows the SIPTO; and the traffic among the H(e)NB, the internet and/or the local network of the residents/companies which is transmitted via the local gateway is unprotected, or is protected by adopting the network security protection modes such as IPsec and/or TLS and the like.

In order to guarantee the smooth implementation of the above flows, the device as shown in Fig. 10 can be arranged. See Fig. 10, Fig. 10 is a SIPTO decision device diagram of an embodiment of the disclosure; the device includes a SIPTO capacity authorization unit, a SIPTO capacity decision unit, a SIPTO execution unit and a security protection unit which are connected.

During specific application, the SIPTO capacity authorization unit can authorize the SIPTO capacity of the H(e)NB and the UE. The SIPTO capacity decision unit can acquire the authorization information in the SIPTO capacity authorization unit, so as to judge whether the H(e)NB and the UE have the SIPTO authority, and notify the judgment result to the SIPTO execution unit; the SIPTO execution unit implements corresponding SIPTO and/or CN communication according to the received judgment result.

In addition, the SIPTO execution unit can further notify the current communication condition to the security protection unit; the security protection unit determines whether implementing security protection for the current communication and implements the security protection, for example: the traffic among the H(e)NB, the internet and/or the local network of the residents/companies which is transmitted via the local gateway can be unprotected, or be protected by adopting the network security protection modes such as IPsec and/or TLS and the like.

Additionally, the SIPTO capacity authorization unit and the SIPTO execution unit can be configured in a functional entity such as the H(e)NB and the like, the SIPTO capacity decision unit can be configured in functional entities such as the SeGW, the SGW, the PGW, the MME, the MSC, the SGSN, the H(e)NB Gateway or the TOF entity and the like.

The specific functions which can be realized by each operation unit in Fig. 10 are described in details in the above flows, and are not described again.

In conclusion, with both the method and the device, the SIPTO decision technology of the H(e)NB system provided by the disclosure can support the SIPTO of the H(e)NB, and can further provide a security protection in a communication process.

The above is only the preferred embodiment of the disclosure and not intended to limit the disclosure. Any modifications, equivalent replacements, improvements and the like within the spirit and principle of the disclosure shall fall within the scope of protection of the disclosure.

## Claims

1. A Selected Internet Protocol Traffic Offload (SIPTO) decision method for a Home (evolved) Node-B (H(e)NB) system, comprising:
judging whether the H(e)NB has a SIPTO authority, and allowing the H(e)NB to implement the SIPTO if the H(e)NB has the SIPTO authority.

2. The method according to claim 1, wherein the process of judging whether the H(e)NB has the SIPTO authority comprises:
searching a H(e)NB identity stored in a decision point for judging whether the H(e)NB has the SIPTO authority, and confirming that the H(e)NB has the SIPTO authority if the H(e)NB identity is found, or the identity of the H(e)NB which is added with a SIPTO mark is found.

3. The method according to claim 2, wherein the method further comprises:
the H(e)NB implementing the SIPTO;
or, the H(e)NB implementing the SIPTO, and establishing a connection with a Core Network (CN).

4. The method according to any one of claims 1 to 3, wherein the method further comprises:
judging whether a User Equipment (UE) can implement the SIPTO, and implementing the SIPTO aiming at the data of the UE when the UE can implement the SIPTO.

5. The method according to claim 4, wherein, the process of judging whether the UE can implement the SIPTO comprises:
searching a UE identity which is stored in a related network element for authenticating the UE, and determining that the UE can implement the SIPTO if the UE identity is found, or the identity of the UE which is added with a SIPTO mark is found.

6. The method according to claim 4, wherein the method further comprises:
implementing network security protection comprising Internet Protocol (IP) Security (IPsec) and/or Transport Layer Security (TLS) for the transmission data of the H(e)NB and/or the UE.

7. A SIPTO decision method of a H(e)NB system, comprising: judging whether the UE can implement the SIPTO, and implementing the SIPTO aiming at the transmission data of the UE when the UE can implement the SIPTO.

8. The method according to claim 7, wherein, the process of judging whether the UE can implement the SIPTO comprises:
searching a UE identity which is stored in the related network element for authenticating the UE, and determining that the UE can implement the SIPTO if the UE identity is found, or the identity of the UE which is added with a SIPTO mark is found.

9. The method according to claim 7 or 8, wherein, the method further comprises:
selecting, by the UE, to implement the SIPTO, aiming at the transmission data of the UE, implementing, by the H(e)NB accessed by the UE, the SIPTO with the internet, and/or implementing the SIPTO with the local network of residents/companies.

10. The method according to claim 9, wherein:
the SIPTO implemented by the H(e)NB is implemented in the case that the local network of the residents/companies allows the SIPTO; or,
the SIPTO implemented by the H(e)NB is directly implemented without allowing the SIPTO by the local network of the residents/companies.

11. The method according to claim 9, wherein the method further comprises: not protecting the transmission data of the UE, or implementing the network security protection comprising the IPsec and/or TLS.

12. A SIPTO decision device of a H(e)NB system, comprising a SIPTO capacity decision unit and a SIPTO execution unit, wherein,
the SIPTO capacity decision unit is configured to judge whether the H(e)NB and/or the UE has the SIPTO authority, and to notify a judgment result to the SIPTO execution unit;
the SIPTO execution unit is configured to determine whether implementing corresponding SIPTO communication according to the received judgment result.

13. The device according to claim 12, wherein the SIPTO execution unit is further configured to implement corresponding SIPTO and/or CN communication according to the judgment result.

14. The device according to claim 12 or 13, wherein the device further comprises a SIPTO capacity authorization unit, which is configured to authorize the SIPTO capacity of the H(e)NB and/or the UE, in order to make the authorization information referred by the authorization support the SIPTO capacity decision unit to implement the judgment.

15. The device according to claim 12 or 13, wherein the device further comprises a security protection unit, which is configured to acquire current communication condition from the SIPTO execution unit, so as to determine whether implementing security protection for the current communication and executing the security protection.
